# EUROPÄISCHE PATENTSCHRIFT

(11) **EP 3 395 701 B1**
(45) Veröffentlichungstag und Bekanntmachung des Hinweises auf die Patenterteilung: **01.04.2020**
(21) Anmeldenummer: 18167676.8
(22) Anmeldetag: 17.04.2018
(51) Int. Cl.: B65B 57/02, B65B 61/26, B65B 9/04, B65B 61/02

(54) **GEWICHTSAUSZEICHNUNGSKONTROLLE FÜR VERPACKUNGEN**
WEIGHT CHECK FOR PACKAGING
CONTRÔLE D'ÉTIQUETAGE DE POIDS POUR EMBALLAGES

(30) Priorität: 26.04.2017 DE 102017108966
(43) Veröffentlichungstag der Anmeldung: 31.10.2018
(73) Patentinhaber: MULTIVAC Marking & Inspection GmbH & Co. KG, 32130 Enger (DE)
(72) Erfinder: FRANK, Dr. Hendrik, 32130 Enger (DE); SIEGENBRINK, Daniel, 33617 Bielefeld (DE)
(74) Vertreter: Grünecker Patent- und Rechtsanwälte PartG mbB

(56) Entgegenhaltungen:
- EP-A1- 2 281 749
- EP-A1- 2 345 587
- US-A- 3 650 773

## Beschreibung

Die Erfindung bezieht sich auf eine Verpackungsanlage zum Kennzeichnen von Verpackungen mit dem für das verpackte Produkt zugehörigen Preis gemäß den Merkmalen des Anspruchs 1 und auf ein Verfahren gemäß den Merkmalen des Anspruchs 7.

Aus der EP 2281749 A1 ist eine Tiefziehverpackungsmaschine bekannt, die eine Wiegeeinheit im Einlegebereich umfasst, um das Gewicht von Produkten, die anschließend manuell in die Verpackungsmulden eingelegt werden, zu ermitteln. Der Bediener bekommt mit einem Signal angezeigt, in welche Verpackungsmulde das von der Waage genommene Produkt einzulegen ist, und eine Überwachungseinheit überprüft diesen Vorgang, um sicherzustellen, dass das betreffende Produkt in die dafür vorgesehene Verpackungsmulde eingelegt wurde. So soll sichergestellt werden, dass die Information des Gewichts der jeweiligen Mulde zu dem Aufdruck auf eine Oberfolie passt, wobei das Aufdrucken von Informationen auf die Oberfolie erfolgt, bevor diese in einer Siegelstation die Verpackungsmulden verschließt. Sollte es auf der Transportstrecke zwischen dem Einlegebereich und der Siegelstation zu einem Entfernen oder Wechsel von Produkten kommen, so kann dieses nicht erkannt werden. Mit diesem Konzept können gewisse Richtlinien für ein geeichtes Wiegen und ein zugelassenes Preisauszeichnen nicht erfüllt werden.

Aus der DE 102005018251 A1 ist eine Schalenverschließmaschine bekannt, bei der nach dem Versiegeln die Verpackungen auf ein Wägeband übergeben werden, um das spezifische Gewicht einer jeden Packung zu ermitteln. Anschließend wird die gewogene Verpackung einem Auszeichnungsband übergeben und mit einem Etikett auf der Oberseite der Verpackung versehen. Auf dem Etikett sind Gewichts- und Preisinformationen enthalten, wobei diese Informationen an eine Druckeinrichtung am Etikettenspender übermittelt werden. Das Konzept, bei dem eine bereits geschlossene Verpackung gewogen und direkt danach mit einer Preisinformation versehen wird, entspricht maschinenseitig der Zulassung zum Preisauszeichnen, wenn kein Zugriff auf das Wägeband und das Auszeichnungsband von außen möglich ist.

EP 2 345 587 A1 offenbart eine Verpackungsanlage mit stromabwärts der Siegelstation positionierten Prüfstationen. Darunter befindet sich ein Röntgengerät oder ein Metalldetektor zur Prüfung auf metallische Fremdkörper in den hergestellten Verpackungen sowie eine Waage zur Feststellung des Gewichts der hergestellten Verpackungen, einschließlich dem darin aufgenommenen Produkt. Des weiteren kann eine Prüfstation stromabwärts der Siegelstation vorgesehen sein, die als Visionsystem beispielsweise die Lage und Bedruckung eines Etiketts prüft oder allein das Vorhandensein eines Etiketts.

Aufgabe der vorliegenden Erfindung ist es, eine Verpackungsanlage sowie ein Verfahren zum Betrieb einer Verpackungsanlage zur Verfügung zu stellen, womit sich eine produktbezogene auf das Verpackungsmaterial aufgebrachte Information überprüfen lässt.

Diese Aufgabe wird gelöst durch eine Verpackungsanlage mit den Merkmalen des Anspruchs 1 und durch ein Verfahren zum Betrieb einer solchen Verpackungsanlage gemäß den Merkmalen des Anspruchs 7. Vorteilhafte Weiterbildungen der Erfindung sind in den Unteransprüchen angegeben.

Die erfindungsgemäße Verpackungsanlage umfasst eine Siegelstation zum vorzugsweise gasdichten Verpacken eines Produkts mit wenigstens einer Folienbahn, wobei eine Druckvorrichtung stromaufwärts der Siegelstation vorgesehen und dazu konfiguriert ist, Informationen, insbesondere ein Produktgewicht und einen dazugehörigen Verkaufspreis, auf die Folienbahn oder auf ein Etikett, wobei sich das Etikett bereits auf der Folienbahn befinden kann, aufzudrucken, wobei stromaufwärts der Siegelstation wenigstens eine vordere Wiegevorrichtung vorgesehen ist, die dazu konfiguriert ist, einen vom Produktgewicht eines einzelnen Produkts abhängigen Gewichtswert zu erfassen und an eine Steuerung weiterzuleiten. Die erfindungsgemäße Verpackungsanlage zeichnet sich dadurch aus, dass die Steuerung die Druckvorrichtung zum Aufdrucken der Informationen in Abhängigkeit vom erfassten Gewichtswert ansteuert, und dass innerhalb der Verpackungsanlage stromabwärts der Siegelstation wenigstens eine erste Inspektionsvorrichtung vorgesehen ist, die dazu konfiguriert ist, die Informationen auf dem Aufdruck auszulesen. So kann die Gewichts- und/oder Preisinformation des jeweiligen Produkts bzw. der Produktportion vor dem Siegeln oder auch vor dem Füll- oder Einlegevorgang ermittelt werden und z. B. unter Einsatz einer Streckensteuerung, auch als Packungsverfolgung gekannt, packungsbezogen im Bereich der Zuführung der Folienbahn in die Siegelstation aufgedruckt werden. Das Drucken kann direkt auf die Folienbahn, auf ein auf der Folienbahn bereits befindliches Etikett oder zuvor auf ein Etikett, welches anschließend auf die Folienbahn gespendet wird, erfolgen. Die an den Siegelprozess anschließende Prüfung der Verpackung auf Übereinstimmung der aufgedruckten Preisinformation und dem dazugehörigen Produkt ist mittels der ersten Inspektionsvorrichtung ermöglicht. Die Erfindung führt zu einer Reduktion des Platzbedarfs für die Verpackungsanlage, da die Auszeichnung schon vor der Siegelstation stattfindet.

Unter dem Begriff Produkt ist nicht nur ein einzelnes Produkt sondern auch eine Produktportion zu verstehen, die beispielsweise aus mehreren Scheiben oder Stücken eines Lebensmittels besteht.

Die Folienbahn kann eine Deckelfolie zum Siegeln auf in eine Unterfolienbahn tiefgezogene Mulden oder zum Siegeln auf Schalen sein, sowie eine einzige Folienbahn, die auf einer Schlauchbeutelmaschine zum Verpacken des Produkts auf bekannte Weise verarbeitet wird.

Für eine besonders vorteilhafte und eichfähige Ausführung ist eine hintere Wiegevorrichtung unterhalb der ersten Inspektionsvorrichtung vorgesehen, die dazu konfiguriert ist, das Gewicht einzelner Verpackungen zu erfassen, wobei die Steuerung oder eine weitere Steuerung vorgesehen und dazu konfiguriert ist, das Gewicht der Verpackung und die aufgedruckte Gewichts- und/oder Preisinformation auf Übereinstimmung zu verifizieren. Im Rahmen der Erfindung bedeutet "verifizieren", dass die mit der ersten Inspektionsvorrichtung stromabwärts der Siegelstation ausgelesenen Informationen auf dem Aufdruck verglichen werden auf ein bestimmtes Maß an Übereinstimmung mit einem zugehörigen Wert, der parallel gemessen oder nach einer vorangehenden Messung gespeichert sein kann.

Die optionale, stromabwärts der Siegelstation angeordnete, hintere Wiegevorrichtung misst das Gesamtgewicht einer Verpackung, d. h. die Summe aus dem Produktgewicht und dem Gewicht des Verpackungsmaterials. Von diesem Gesamtgewicht wird beim Verifizieren zunächst das bekannte, als konstant angenommene Gewicht des Verpackungsmaterials abgezogen, bevor das resultierende Netto-Produktgewicht verglichen wird mit dem auf der Verpackung als Information aufgedruckten Produktgewicht. Alternativ oder zusätzlich könnte aus dem aufgedruckten Verkaufspreis unter Kenntnis des spezifischen Preises (d. h. Preis pro Gewichtseinheit) das Produktgewicht berechnet und mit dem aus der Gesamtgewicht der Verpackung ermittelten Produktgewicht verglichen werden. Sind die Produktgewichte identisch oder liegen sie innerhalb einer bestimmten Toleranzgrenze (beispielsweise mit einer Abweichung von maximal 2 % oder maximal 5 %), wird dies als erfolgreiche Verifizierung gewertet.

Die Steuerung, die die Überprüfung ausführt, kann die Steuerung der Verpackungsmaschine, der Verpackungsanlage oder die Steuerung der ersten Inspektionsvorrichtung oder der hinteren Wiegevorrichtung sein. Durch einen Abgleich der für die auf der Wiegevorrichtung befindlichen Verpackung ermittelten Preisinformation mit dem aktuellen Produktgewicht kann eine eichfähige, platzsparende und leistungsstarke Preisauszeichnungsfunktion ermöglicht werden.

Eine ebenso vorteilhafte alternative Ausführung sieht eine zweite Inspektionsvorrichtung vor, die dazu konfiguriert ist, eine Kennung, z. B. eine Seriennummer oder eine eineindeutige Nummer, des Behälters zu erfassen, wobei die Steuerung oder eine weitere Steuerung vorgesehen und dazu konfiguriert ist, die Kennung mit der aufgedruckten Gewichts- und Preisinformation auf Übereinstimmung zu verifizieren. Diese bevorzugt für eine Schalenverschließmaschine oder Tiefziehverpackungsmaschine vorgesehene Ausführung kann zu einer eichfähigen Ausführung führen, bei der das mittels der vorderen Wiegevorrichtung ermittelte Produktgewicht einer packungsspezifischen Kennung in der Steuerung zugeordnet wird. Die Streckensteuerung sorgt für den dazugehörigen Aufdruck der Gewichts- und/oder Preisinformation auf eine Deckelfolie noch vor dem Siegeln. Analog erfolgt nach der Siegelstation die Erfassung des Aufdrucks der Preisinformation und die Erfassung der Kennung mittels jeweils einer Inspektionsvorrichtung und der Verifizierung gegen das in der Steuerung als zu dieser Kennung zugehörig gespeicherte Produktgewicht oder gegen die anhand der Streckensteuerung erwartete Kennung.

Bevorzugt umfasst die Verpackungsanlage eine Tiefziehverpackungsmaschine, wobei die Folienbahn eine Deckelfolie ist, die mehrere mit Produkt gefüllte Mulden in einem Arbeitsschritt versiegelt.

Alternativ umfasst die Verpackungsanlage eine Schalenverschließmaschine, wobei die Folienbahn eine Deckelfolie ist, die mit Produkt gefüllte Behälter, sogenannte Trays, versiegelt.

In einer alternativen Ausführung umfasst die Verpackungsanlage eine Schlauchbeutelverpackungsmaschine, vorzugsweise eine horizontale Schlauchbeutelmaschine, mittels derer das Produkt auf bekannte Weise verpackt wird.

Die Erfindung bezieht sich auch auf ein Verfahren zum Betrieb einer Verpackungsanlage, die eine Siegelstation zum vorzugsweise gasdichten Verpacken von Produkten mit einer Folienbahn, eine Druckvorrichtung zum Aufdrucken von Informationen, insbesondere ein Produktgewicht und/oder einen darauf basierenden Preis, auf die Folienbahn oder auf ein auf die Folienbahn aufgebrachtes oder aufzubringendes Etikett und eine vordere Wiegevorrichtung zum Erfassen eines Gewichtswerts aufweist, wobei die vordere Wiegevorrichtung stromaufwärts vor der Siegelstation vorgesehen ist, der Gewichtswert mittels einer Wiegeeinrichtung ermittelt und an eine Steuerung übermittelt wird und die Steuerung die Druckvorrichtung dazu ansteuert, eine anhand des ermittelten Gewichtswerts berechnete Information, insbesondere Preis und/oder Produktgewicht auf die Folienbahn oder auf ein auf der Folienbahn aufgebrachtes oder aufzubringendes Etikett aufzudrucken. Ferner wird nach dem Versiegeln der Aufdruck auf der Folienbahn oder auf dem Etikett detektiert und mit dem Produktgewicht des zugehörigen Produkts auf Übereinstimmung verifiziert.

Im Folgenden wird ein vorteilhaftes Ausführungsbeispiel der Erfindung anhand einer Zeichnung näher erläutert. Im Einzelnen zeigen:
- Fig. 1: eine erfindungsgemäße Verpackungsanlage mit einer Schalenverschließmaschine,
- Fig. 2: eine Variante der erfindungsgemäße Verpackungsanlage mit einer Schalenverschließmaschine,
- Fig. 3: eine weitere Variante der erfindungsgemäße Verpackungsanlage mit einer Tiefziehverpackungsmaschine und
- Fig. 4: einen Aufdruck auf einem Etikett oder auf der Folienbahn.

Gleiche Komponenten sind in den Figuren durchgängig mit gleichen Bezugszeichen versehen.

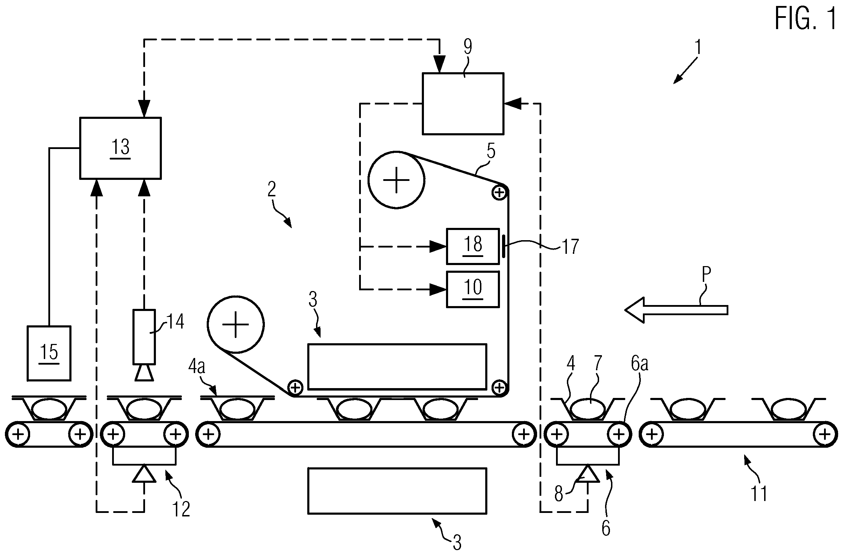

Fig. 1 zeigt eine erfindungsgemäße Verpackungsanlage 1 mit einer schematisch dargestellten Schalenverschließmaschine 2 als eine mögliche Variante einer Verpackungsmaschine. Die Schalenverschließmaschine 2 weist eine Siegelstation 3 auf, um Behälter 4 mit einer Folienbahn 5 in Form einer Deckelfolie zu verschließen. Dies kann mit oder ohne Vakuum bzw. unter modifizierter Atmosphäre erfolgen. In einer Produktionsrichtung P ist stromaufwärts der Siegelstation 3 eine dynamische, vordere Wiegevorrichtung 6 angeordnet, die auch Teil der Schalenverschließmaschine 2 sein kann. Die Wiegevorrichtung 6 umfasst ein Förderband 6a und ist dazu konfiguriert, einzelne mit Produkt 7 gefüllte Behälter 4 beispielsweise auch während der Transportbewegung zu wiegen. Der dabei ermittelte Gewichtswert wird von einer Wägezelle als Wiegeeinrichtung 8 der Wiegevorrichtung 6 an eine Steuerung 9 übermittelt. Die Steuerung 9 kann die Steuerung der Schalenverschließmaschine 2, der Verpackungsanlage 1 oder auch einer Druckvorrichtung 10 sein. In der Steuerung 9 sind entsprechende Daten (insbesondere der spezifische Preis) zu verschiedenen Produkten 7 hinterlegt, um für das Produktgewicht die zugehörige Preisinformation zu ermitteln.

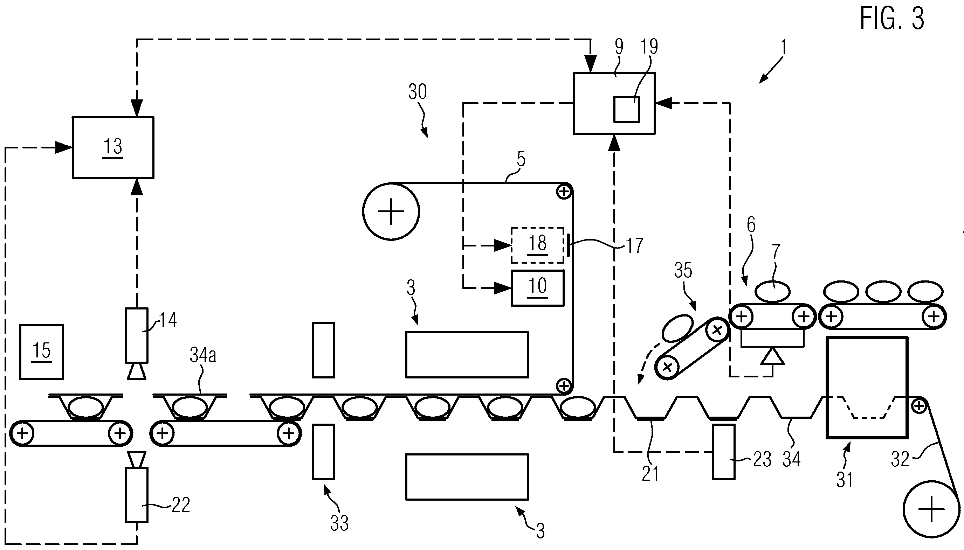

Die Druckvorrichtung 10 ist von der Steuerung 9 ansteuerbar und dazu vorgesehen, die Gewichts- und/oder die Preisinformation an einer Position auf die Deckelfolie 5 aufzudrucken, die in der Siegelstation 3 auf den entsprechend gewogenen Behälter 4 aufgesiegelt wird. Alternativ können auch die Gewichts- und/oder die Preisinformation auf ein Etikett 17 gedruckt werden, das dann von einer Etikettiervorrichtung 18 auf die vorher beschriebene Position auf die Deckelfolie 5 aufgebracht wird. So kann das Gewicht eines bereits vor der Siegelstation 3 gewogenen Behälters 4 mittels einer rechnerbasiert in der Steuerung 9 implementierten Streckensteuerung, auch Packungsverfolgung genannt, noch vor dem Siegelvorgang in eine Preisinformation umgerechnet werden. Wird - wie in Fig. 1 - das Gewicht des Produkts 7 in einem Zustand ermittelt, in dem sich das Produkt 7 bereits im Behälter 4 befindet, zieht die vordere Wiegevorrichtung 6 oder die Steuerung 9 von dem Gewichtswert einen vorbestimmten, als konstant vorausgesetzten Gewichtswert des Verpackungsmaterials ab, um das reine Produktgewicht zu bestimmen, dass das mittels der Druckvorrichtung 10 aufgedruckt wird. Eine solche Berechnung kann entfallen, wenn die vordere Wiegevorrichtung 6 (wie in Fig. 3 gezeigt) direkt das Produktgewicht des Produkts 7 misst, bevor dieses in einen Behälter oder eine Verpackungsmulde eingebracht wird.

Die Behälter 4 werden über eine Zuführvorrichtung 11 in Produktionsrichtung P transportiert und einzeln von der Zuführvorrichtung 11 auf die vordere Wiegevorrichtung 6 übergeben. Somit kann die Zuführvorrichtung 11 auch als Pufferband ausgeführt sein. Die Fig. 1 zeigt eine einspurige Ausführung. Denkbar sind auch eine zwei- oder mehrspurige Varianten. In diesen Fällen ist pro Spur je eine vordere Wiegevorrichtung 6 vorzusehen, um Behälter 4 einzeln zu wiegen.

Die in der Siegelstation 3 erzeugten bzw. gesiegelten Verpackungen 4a, die als Vakuumpackung oder als Verpackungen mit einer modifizierten Atmosphäre erzeugt werden können, werden stromabwärts der Siegelstation 3 einzeln einer hinteren Wiegevorrichtung 12 zugeführt und dort gewogen. Diese Gewichtsinformation wird an die Steuerung 9 oder an eine weitere Steuerung 13 weitergeleitet. Eine oberhalb der hinteren Wiegevorrichtung 12 vorgesehene optische Erfassungsvorrichtung (Inspektionsvorrichtung) 14, vorzugsweise eine Kamera, ermittelt die aufgedruckte Preis- und/oder Gewichtsinformation und leitet diese an die zuvor genannte Steuerung 9, 13 weiter. Die Steuerung 9, 13 vergleicht die Informationen der hinteren Wiegevorrichtung 12 und der Erfassungsvorrichtung 14 auf Gültigkeit, d. h. sie nimmt eine Verifikation vor. Im Falle eines Fehlers (d. h. eines negativen Ergebnisses der Verifikation) kann die Steuerung 9, 13 eine Ausschleusvorrichtung 15 stromabwärts nach der hinteren Wiegevorrichtung 12 aktivieren, damit eine solche fehlerhafte Verpackung 4a ausgeschleust und nicht dem weiteren Fertigungsprozess zugeführt wird. Die Steuerung 13 kann eine weitere Steuerung 13 sein oder aber identisch mit der Steuerung 9 der Verpackungsmaschine 2 oder der Verpackungsanlage 1 sein.

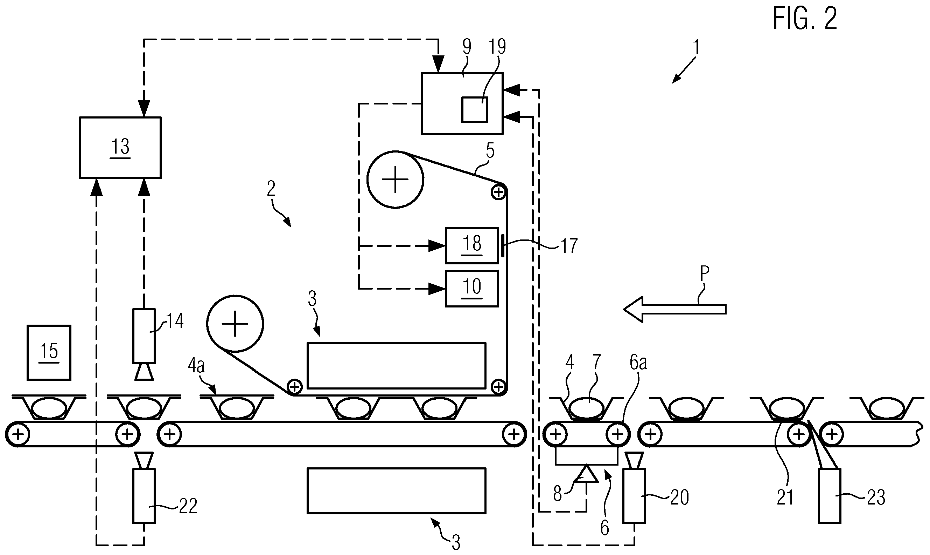

Fig. 2 zeigt eine Variante der erfindungsgemäßen Verpackungsanlage 1 mit einer Schalenverschließmaschine 2. Der Unterschied zur Fig. 1 liegt darin, dass direkt vor oder nach der vorderen Wiegevorrichtung 6 eine erste optische Erfassungsvorrichtung 20 vorgesehen ist, um eine eineindeutige Kennung (z. B. Nummer) des Behälters 4 zu erfassen und an die Steuerung 9 zu übermitteln. Diese eineindeutige Kennung des Behälters 4 kann im Behälter 4 selbst eingeprägt sein oder mittels eines bedruckten Etiketts 21 zuvor vorzugsweise mittels einer Etikettiervorrichtung 23 auf der Unterseite des Behälters 4 angebracht worden sein. Das Anbringen des Etiketts 21 kann beim Abstapeln leerer Behälter 4 oder nach dem Füll- bzw. Einlegprozess eines Produkts 7 oder einer Produktportion erfolgen. Beispielsweise ist die optische Erfassungsvorrichtung 20 in Form einer Kamera im Übergangsbereich von der Zuführvorrichtung 11 auf die vordere Wiegevorrichtung 6 angeordnet, um die Kennung desjenigen Behälters 4 zu erfassen, der anschließend gewogen wird. In der Steuerung 9 wird dieser erfassten Kennung das Produktgewicht in einem Datensatz 19 zugeordnet und die Deckelfolie 5 entsprechend der Fig. 1 mit diesen Informationen versehen.

Ein weiterer Unterschied zur Fig. 1 liegt darin, dass anstatt der hinteren Wiegevorrichtung 12 stromabwärts der Siegelstation 3 eine weitere untere optische Inspektions- bzw. Erfassungsvorrichtung 22 vorgesehen ist. Vorzugsweise sind die weitere untere Erfassungseinheit 22 und die obere Erfassungseinheit 14 gegenüberliegend angeordnet, um annähernd zeitgleich bzw. gemeinsam die Kennung an der Unterseite und die auf der Deckelfolie 5 aufgedruckte Gewichts- und/oder Preisinformation ein und derselben Verpackung 4a mit den Daten des zugehörigen Datensatzes 19 abzugleichen und die Verpackung 4a im Fehlerfall an der Ausschleusvorrichtung 15 auszusortieren, um sicherzustellen, dass nur korrekt ausgezeichnete Verpackungen 4a nachgeordneten Prozessen zugeführt werden.

Alternativ kann auch anstatt einer ersten Erfassungsvorrichtung 20 vor oder direkt nach der ersten Wiegevorrichtung 6 eine Etikettiereinrichtung 23 zum Anbringen eines Etikettes 21 mit der Kennung bzw. Nummer des Behälters 4 vorgesehen sein. Die Etikettiereinrichtung 23 selbst übermittelt dann an die Steuerung 9 die Kennung desjenigen Behälters 4, um einen Datensatz 19 von zusammengehöriger Kennung, Gewicht und Preis zu erzeugen, der nach der Siegelstation 3 wie oben beschrieben verifiziert wird.

Fig. 3 zeigt eine weitere Variante der erfindungsgemäße Verpackungsanlage 1 mit einer Tiefziehverpackungsmaschine 30. Diese Variante umfasst ebenfalls eine Etikettiereinrichtung 23, aber unterscheidet sich von derjenigen gemäß Fig. 2 dadurch, dass das Produkt 7 nicht in einzelne Behälter 4 sondern in Mulden 34 eingelegt wird, die mittels einer Formstation 31 in eine Folienbahn 32 tiefgezogen wurden. Eine vordere Wiegevorrichtung 6 ermittelt als Gewichtswert das Gewicht eines Produkts 7 oder einer Produktportion, bevor das Produkt 7 in die Mulde 34 eingelegt bzw. übergeben wird. Das Einlegen kann manuell oder mittels einer Robotereinheit erfolgen. Denkbar ist auch die Übergabe an ein Einlegeband 35. Das Anbringen eines Etiketts 21 mit einer eineindeutigen Kennung kann z. B. von unten an noch leere Mulden 34 erfolgen. Die Streckensteuerung in der Steuerung 9 kann über die Position des Etiketts 21 entlang der Produktionsstrecke die Kennung der Mulde 34 und das ermittelte Gewicht von dem in diese Mulde 34 eingelegten Produkt 7 zu einem Datensatz 19 zusammenführen. Wie in den zuvor gezeigten Varianten von Fig. 1 und Fig. 2 wird die Gewichts- und/oder Preisinformation derart auf die Deckelfolie 5 aufgedruckt, dass diese Informationen in der Siegelstation 3 auf der dem Datensatz 19 zugeordneten Mulde 34 bzw. dem Produkt 7 platziert ist. Eine stromabwärts der Siegelstation 3 angeordnete Schneidstation 33 erzeugt vereinzelte Verpackungen 34a, die einzeln an den optischen Erfassungseinrichtungen 22 und 14 vorbeitransportiert werden, um die Kennung auf der Unterseite und die aufgedruckte Preisinformation auf der Oberseite der Verpackung 34a an die Steuerung 13 und/oder 9 weiterzuleiten, damit die Steuerung 9, 13 die erhaltenen Daten mit dem zur Kennung zugehörigen Datensatz 19 abgleichen kann.

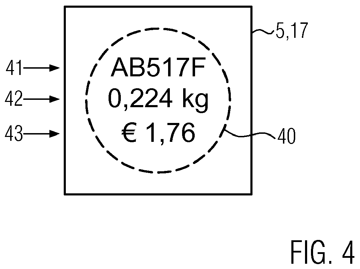

Fig. 4 zeigt exemplarisch einen mittels der Druckvorrichtung 10 auf ein Etikett 17 oder direkt auf die Folienbahn 5 aufgebrachten Aufdruck 40. Dieser Aufdruck umfasst eine verpackungs- oder produktspezifische Kennung 41, die aus einer Kombination von Zeichen wie Buchstaben und/oder Ziffern bestehen aber auch gänzlich entfallen kann. Der Aufdruck 40 umfasst ferner als erste Information 42 ein ermitteltes Produktgewicht und als zweite Information 43 einen basierend auf dem Produktgewicht berechneten Verkaufspreis 43.

Denkbar ist auch eine nicht näher dargestellte Ausführung der Verpackungsmaschine 2 als Schlauchbeutelmaschine, bei der das Produkt 7 mit einer einzigen Folienbahn 5 zu einer Verpackung versiegelt wird, wobei das Produkt 7 vor dem Zuführen in oder auf die Folienbahn 5 gewogen wird. Nach einer Vereinzelung der Verpackungen werden diese einzeln gemäß iFig. 1 gewogen und die Preisinformation erfasst und an die Steuerung 13 oder 9 zum Verifizieren weitergeleitet.

## Patentansprüche

1. Verpackungsanlage (1), umfassend eine Siegelstation (3) zum Verpacken eines Produkts (7) mit wenigstens einer Folienbahn (5), wobei eine Druckvorrichtung (10) stromaufwärts der Siegelstation (3) vorgesehen und dazu konfiguriert ist, Informationen (42, 43), insbesondere ein Produktgewicht und/oder einen dazugehörigen Verkaufspreis, als Aufdruck (40) auf die Folienbahn (5) oder auf ein optional bereits auf der Folienbahn (5) befindliches Etikett (17, 21), aufzudrucken, wobei stromaufwärts der Siegelstation (3) wenigstens eine vordere Wiegevorrichtung (6) vorgesehen und dazu konfiguriert ist, einen Gewichtswert zu erfassen und an eine Steuerung (9, 13) weiterzuleiten, wobei die Steuerung (9) dazu konfiguriert ist, die Druckvorrichtung (10) zum Aufdrucken der Informationen in Abhängigkeit von dem erfassten Gewichtswert anzusteuern,
**dadurch gekennzeichnet, dass**
stromabwärts der Siegelstation (3) wenigstens eine erste Inspektionsvorrichtung (14) vorgesehen ist, die dazu konfiguriert ist, die Informationen (42, 43) auf dem Aufdruck (40) auszulesen.

2. Verpackungsanlage nach Anspruch 1, **dadurch gekennzeichnet, dass** eine hintere Wiegevorrichtung (12) unterhalb der Inspektionsvorrichtung (14) vorgesehen ist, die dazu konfiguriert ist, ein Verpackungsgewicht einzelner Verpackungen (40a) zu erfassen, wobei die Steuerung (9) oder eine weitere Steuerung (13) dazu konfiguriert ist, das gemessene Verpackungsgewicht zu verifizieren gegen die Informationen (42, 43) auf dem Aufdruck (40).

3. Verpackungsanlage nach einem der vorangehenden Ansprüche, **dadurch gekennzeichnet, dass** eine zweite Inspektionsvorrichtung (22) vorgesehen ist, die dazu konfiguriert ist, eine Kennung (41) eines Behälters (4) zu erfassen, wobei die Steuerung (9) oder eine weitere Steuerung (13) dazu konfiguriert ist, die Kennung (41) zu verifizieren gegen die Informationen (42, 43) auf dem Aufdruck (40).

4. Verpackungsanlage nach Anspruch 3, **dadurch gekennzeichnet, dass** die zweite Inspektionsvorrichtung (22) unterhalb der ersten Inspektionsvorrichtung (14) angeordnet ist.

5. Verpackungsanlage nach einem der vorangehenden Ansprüche, **dadurch gekennzeichnet, dass** die Verpackungsanlage (1) eine Tiefziehverpackungsmaschine (30) umfasst und die Folienbahn (5) eine Deckelfolie ist.

6. Verpackungsanlage nach einem der vorangehenden Ansprüche 1 bis 4, **dadurch gekennzeichnet, dass** die Verpackungsanlage (1) eine Schlauchbeutelverpackungsmaschine, vorzugsweise eine horizontale Schlauchbeutelmaschine, umfasst.

7. Verfahren zum Betrieb einer Verpackungsanlage (1), die eine Siegelstation (3) zum Verpacken von Produkten (7) mit einer Folienbahn (5), eine Druckvorrichtung (10) zum Aufdrucken von Informationen (42, 43), insbesondere ein Produktgewicht und/oder einen darauf basierenden Preis, auf die Folienbahn (5) oder auf ein auf die Folienbahn (5) aufgebrachtes oder aufzubringendes Etikett (17) und eine vordere Wiegevorrichtung (6) zum Erfassen eines Gewichtswerts aufweist, wobei die vordere Wiegevorrichtung (6) stromaufwärts vor der Siegelstation (3) vorgesehen ist, der Gewichtswert mittels einer Wiegeeinrichtung (8) ermittelt und an eine Steuerung (9) übermittelt wird und die Steuerung (9) die Druckvorrichtung (10) dazu ansteuert, eine anhand des ermittelten Gewichtswerts berechnete Information (42, 43), insbesondere Preis und/oder Produktgewicht auf die Folienbahn (5) oder auf ein auf der Folienbahn (5) aufgebrachtes oder aufzubringendes Etikett (17) aufzudrucken, **dadurch gekennzeichnet, dass** nach dem Versiegeln der Aufdruck (40) auf der Folienbahn (5) oder auf dem Etikett (17) detektiert wird und mit dem Produktgewicht des zugehörigen Produkts auf Übereinstimmung verifiziert wird.

8. Verfahren nach Anspruch 7, **dadurch gekennzeichnet, dass** die Verpackungsanlage (1) eine Tiefziehverpackungsmaschine (30) umfasst und die Folienbahn (5) eine Deckelfolie ist.

9. Verfahren nach einem der Ansprüche 7 bis 8, **dadurch gekennzeichnet, dass** die Verpackungsanlage (1) eine Schlauchbeutelverpackungsmaschine, vorzugsweise eine Horizontalschlauchbeutelmaschine, ist.

10. Verfahren nach einem der vorangehenden Ansprüche 7 bis 9, **dadurch gekennzeichnet, dass** mittels einer hinteren Wiegevorrichtung (12) das Gewicht einzelner Verpackungen (4a) erfasst wird und die Steuerung (9) oder eine weitere Steuerung (13) das Verpackungsgewicht verifiziert gegen das aufgedruckte Produktgewicht.

11. Verfahren nach einem der Ansprüche 7 bis 10, **dadurch gekennzeichnet, dass** mittels einer zweiten Inspektionsvorrichtung (22) ein Etikett (17) mit einer Kennung (41) eines Behälters (4) oder Folienabschnitts erfasst und die Steuerung (9) oder die weitere Steuerung (13) die Kennung (41) verifiziert gegen das aufgedruckte Produktgewicht.

## Claims

1. A packaging assembly (1) comprising a sealing station (3) for packaging a product (7) with at least one film web (5), wherein a printer (10) is provided upstream of the sealing station (3) and configured to print information (42, 43), in particular a product weight and/or an associated retail price, as an imprint (40) onto the film web (5) or onto a label (17, 21) which, optionally, may already be present on the film web (5), wherein, upstream of the sealing station (3), at least a forward weighing device (6) is provided and configured to detect a weight value and forward it to a control unit (9, 13), wherein the control unit (9) is configured to control the printer (10) for printing-on the information depending on the detected weight value, **characterized in that**
downstream of the sealing station (3), at least a first inspection device (14) is provided, which is configured to read the information (42, 43) on the imprint (40).

2. The packaging assembly according to claim 1, **characterized in that** a rearward weighing device (12) is provided below the inspection device (14), the rearward weighing device (12) being configured to detect a package weight of individual packages (40a), wherein the control unit (9) or a further control unit (13) is configured to verify the measured package weight against the background of the information (42, 43) on the imprint (40).

3. The packaging assembly according to one of the preceding claims, **characterized in that** a second inspection device (22) is provided, which is configured to detect an identification (41) of a container (4), the control unit (9) or a further control unit (13) being configured to verify the identification (41) against the background of the information (42, 43) on the imprint (40).

4. The packaging assembly according to claim 3, **characterized in that** the second inspection device (22) is arranged below the first inspection device (14).

5. The packaging assembly according to one of the preceding claims, **characterized in that** the packaging assembly (1) comprises a thermoform packaging machine (30) and that the film web (5) is a cover film.

6. The packaging assembly according to one of the preceding claims, **characterized in that** the packaging assembly (1) is a tubular bag forming machine, preferably a horizontal bagging machine.

7. A method of operating a packaging assembly (1) comprising a sealing station (3) for packing products (7) with a film web (5), a printer (10) for printing information (42, 43), in particular a product weight and/or a price based thereon, onto the film web (5) or onto a label (17) that has been applied or is to be applied to the film web (5), and a forward weighing device (6) for detecting a weight value, wherein the forward weighing device (6) is provided upstream of the sealing station (3), the weight value is ascertained and transmitted to a control unit (9) by means of a weighing unit (8) and the control unit (9) controls the printer (10) for printing onto the film web (5) or onto a label (17), which has been applied or is to be applied to the film web (5), information (42, 43), in particular the price and/or the product weight, calculated on the basis of the weight value ascertained, **characterized in that**, after sealing, the imprint (40) on the film web (5) or on the label (17) is detected and verified for conformity with the product weight of the associated product.

8. The method according to claim 7, **characterized in that** the packaging assembly (1) comprises a thermoform packaging machine (30) and that the film web (5) is a cover film.

9. The method according to one of the claims 7 to 8, **characterized in that** the packaging assembly (1) is a tubular bag forming machine, preferably a horizontal bagging machine.

10. The method according to one of the claims 7 to 9, **characterized in that**, by means of a rearward weighing device (12), the weight of individual packages (40a) is detected, and that the control unit (9) or a further control unit (13) verifies the package weight against the background of the printed-on product weight.

11. The method according to one of the claims 7 to 10, **characterized in that**, by means of a second inspection device (22), a label (17) with an identification (41) of a container (4) or of a film section is detected, and that the control unit (9) or the further control unit (13) verifies the identification (41) against the background of the printed-on product weight.

## Revendications

1. Installation d'emballage (1) comprenant une station de scellement (3) pour l'emballage d'un produit (7) avec au moins une bande de film (5), dans laquelle un dispositif d'impression (10) est prévu en amont de la station de scellement (3) et est configuré pour imprimer des informations (42, 43), en particulier un poids de produit et/ou un prix de vente correspondant, sous la forme d'une impression (40) sur la bande de film (5) ou sur une étiquette (17, 21) optionnellement déjà présente sur la bande de film (5), au moins un dispositif de pesage frontal (6) étant prévu en amont de la station de scellement (3) et étant configuré pour détecter une valeur de poids et la transmettre à une commande (9, 13), la commande (9) étant configurée pour commander le dispositif d'impression (10) afin d'imprimer les informations en fonction de la valeur de poids détectée, **caractérisé en ce qu'**en aval de la station de scellement (3) est prévu au moins un premier dispositif d'inspection (14) qui est configuré pour lire les informations (42, 43) figurant sur l'impression (40).

2. Installation d'emballage selon la revendication 1, **caractérisé en ce qu'**un dispositif de pesage arrière (12) est prévu en dessous du dispositif d'inspection (14), qui est configuré pour détecter un poids d'emballage d'emballages individuels (40a), où la commande (9) ou une autre commande (13) est configurée pour vérifier le poids d'emballage mesuré par rapport aux informations (42, 43) figurant sur l'impression (40).

3. Installation d'emballage selon l'une des revendications précédentes, **caractérisée en ce qu'**il est prévu un deuxième dispositif d'inspection (22) qui est configuré pour détecter un indicatif (41) d'un récipient (4), la commande (9) ou une autre commande (13) étant configurée pour vérifier l'indicatif (41) par rapport aux informations (42, 43) figurant sur l'impression (40).

4. Installation d'emballage selon la revendication 3, **caractérisé en ce que** le deuxième dispositif d'inspection (22) est disposé en dessous du premier dispositif d'inspection (14).

5. Installation d'emballage selon l'une des revendications précédentes, **caractérisée en ce que** l'installation d'emballage (1) comprend une machine d'emballage par emboutissage (30) et la bande de film (5) est un film de couverture.

6. Installation d'emballage selon l'une des revendications précédentes 1 à 4, **caractérisée en ce que** l'installation d'emballage (1) comprend une ensacheuse, de préférence une ensacheuse horizontale.

7. Procédé pour faire fonctionner une installation d'emballage (1) comprenant une station de scellement (3) pour l'emballage de produits (7) avec une bande de film (5), un dispositif d'impression (10) pour imprimer des informations (42, 43), en particulier un poids de produit et/ou un prix fondé sur celui-ci, sur la bande de film (5) ou sur une étiquette (17) appliquée ou à appliquer sur la bande de film (5), et un dispositif de pesage frontal (6) pour détecter une valeur de poids, le dispositif de pesage frontal (6) étant prévu en amont de la station de scellement (3), la valeur de poids étant déterminée au moyen d'un dispositif de pesage (8) et transmise à une commande (9), et la commande (9) commandant le dispositif d'impression (10) pour imprimer des informations (42, 43) calculées à partir de la valeur de poids déterminée, en particulier le prix et/ou le poids du produit à imprimer sur la bande de film (5) ou sur une étiquette (17) appliquée ou à appliquer sur la bande de film (5), **caractérisé en ce que** l'impression (40) sur la bande de film (5) ou sur l'étiquette (17) est détectée après le scellement et sa conformité avec le poids du produit correspondant est vérifiée.

8. Procédé selon la revendication 7, **caractérisé en ce que** l'installation d'emballage (1) comprend une machine d'emballage par emboutissage (30) et la bande de film (5) est un film de couverture.

9. Procédé selon l'une quelconque des revendications 7 à 8, **caractérisé en ce que** l'installation d'emballage (1) est une ensacheuse, de préférence une ensacheuse horizontale.

10. Procédé selon l'une des revendications précédentes 7 à 9, **caractérisé en ce que** le poids d'emballages individuels (4a) est détecté au moyen d'un dispositif de pesage arrière (12) et la commande (9) ou une autre commande (13) vérifie le poids de l'emballage par rapport au poids de produit imprimé.

11. Procédé selon l'une des revendications 7 à 10, **caractérisé en ce qu'**une étiquette (17) avec un indicatif (41) d'un récipient (4) ou d'une section de film est détectée au moyen d'un deuxième dispositif d'inspection (22) et la commande (9) ou l'autre commande (13) vérifie l'indicatif (41) par rapport au poids de produit imprimé.
